# EUROPÄISCHE PATENTSCHRIFT

(11) **EP 1 335 193 B1**
(45) Veröffentlichungstag und Bekanntmachung des Hinweises auf die Patenterteilung: **17.08.2011**
(21) Anmeldenummer: 03002801.3
(22) Anmeldetag: 07.02.2003
(51) Int. Cl.: G01L 1/14

(54) **Kraftmessvorrichtung**
Force measuring device
Dispositif de mesure de force

(30) Priorität: 07.02.2002 DE 10204916
(43) Veröffentlichungstag der Anmeldung: 13.08.2003
(73) Patentinhaber: BAG Bizerba Automotive GmbH, 72336 Balingen (DE)
(72) Erfinder: Oberheim, Rainer, 64653 Lorsch (DE)
(74) Vertreter: Hoeger, Stellrecht & Partner Patentanwälte

(56) Entgegenhaltungen:
- EP-A2- 0 199 067
- WO-A1-01/62564
- US-A- 4 649 759

## Beschreibung

Die Erfindung betrifft eine Kraftmessvorrichtung mit einem mindestens bereichsweise biegeelastischen Element und einem daran befestigten Zungenelement, mit einem Magnet und mit einem magnetfeldempfindlichen Sensor, wobei das Zungenelement zwischen zwei Bereichen des biegeelastischen Elements angeordnet ist, das Zungenelement mit seinem einen Ende fest mit einem Bereich des biegeelastischen Elements verbunden ist und mit seinem freien Ende bei elastischen Verformungen des biegeelastischen Elements relativ zu dem anderen Bereich auslenkbar ist und diese Auslenkung mittels des Magneten und des magnetfeldempfindlichen Sensors messbar ist.

Kraftmessvorrichtungen finden in vielen Bereichen sowohl des täglichen Lebens als auch in der Industrie oder zu Forschungszwecken Anwendung. Entsprechend den unterschiedlichen Anforderungen können mittlerweile Kraftmessvorrichtungen als kostengünstige Massenartikel in großer Auflage hergestellt werden oder aber eigens für komplexe Aufgaben in Spezialanwendungen mit erheblichem Aufwand konstruiert und verwirklicht werden. In Abhängigkeit von der gewünschten Messgenauigkeit und den Herstellungskosten werden unterschiedliche Messverfahren zur Messung eingeleiteter Kräfte verwendet.

Ein vielseitig anwendbares Messverfahren beruht auf der Verwendung von Dehnungsmessstreifen als Sensorelement für von einer Kraft verursachten Verformungen, wobei die gemessene Verformung in ein elektrisches Signal umgesetzt wird. Obwohl Dehnungsmessstreifen zur Kraftmessung in allen Bereichen und über viele Größenordnungen hinweg erfolgreich eingesetzt werden können, bedingt dieses Messverfahren auch Schwierigkeiten und erfordert je nach gewünschter Präzision einen hohen konstruktiven Aufwand. So müssen üblicherweise zur Temperaturkompensation mehrere Dehnungsmessstreifen verwendet werden, deren Signale in geeigneter Weise miteinander verrechnet und ausgewertet werden. Die Signalstärke der elektrischen Signale eines Dehnungsmessstreifens ist gering, so dass eine aufwendige elektrische Signalverstärkung notwendig ist, bevor die elektrischen Signale mit üblichen Elektronikkomponenten ausgewertet und verarbeitet werden können. Mit zunehmender Messpräzision steigen die Anforderungen an die Verbindung der Dehnungsmessstreifen auf der Oberfläche der Verformungselemente. Auch aus diesem Grund werden Dehnungsmessstreifen kaum für Verformungselemente aus Kunststoff verwendet.

Neben vielen anderen Messverfahren gewinnt die Verwendung von magnetfeldempfindlichen Sensoren, insbesondere Hall-Sensoren zunehmend an Bedeutung. Solche mittlerweile in großer Anzahl und kostengünstig herstellbare magnetfeldempfindliche Sensoren können kleinste Veränderungen eines Magnetfelds, wie sie beispielsweise durch eine kleine, von einer Kraft bewirkten Auslenkung eines Magnets verursacht werden, mit hoher Präzision nachweisen. Die technischen Anforderungen bei der Verwendung von Hall-Sensoren zur Kraftmessung sind verhältnismäßig gering. Die elektrischen Messsignale können mit einfachen Mitteln ausgewertet und zur Verringerung ungewollter Einflüsse korrigiert werden.

Derartige Kraftmessvorrichtungen sind seit längerem bekannt und finden u. a. wegen des berührungslosen Kraftmessvorgangs bei stark beanspruchten Maschinen, insbesondere Landmaschinen, Verwendung.

Eine Kraftmessvorrichtung der eingangs beschriebenen Gattung wird in der Offenlegungsschrift DE 35 15 126 A1 beschrieben. Ein biegesteifer Bolzen ist dabei im Inneren eines rohrförmigen elastischen Elements angeordnet, wobei das eine Bolzenende fest mit einem Ende des elastischen Elements verbunden ist und bei einer durch eine an dem elastischen Element angreifende Kraft bewirkten Verformung des rohrförmigen Elements eine mit einem Hall-Sensor messbare Lageänderung des freien Bolzenendes mit dem zugeordneten Bereich des elastischen Elements erfolgt. Die zu messende Kraft wird dabei senkrecht bzgl. der Längsachse des röhrenförmigen elastischen Elements eingeleitet.

Die an die Anforderungen für Landmaschinen angepasste Kraftmessvorrichtung benötigt konstruktionsbedingt verschiedene Bauteile zum Lagern des röhrenförmigen elastischen Elements sowie zum Einleiten der zu messenden Kraft und ist aufgrund der Ausführung und Anordnung des röhrenförmigen Elements und des Bolzens wenig geeignet, über einen großen Messbereich auftretende Kräfte mit hoher Genauigkeit zu messen. WO 01/62564 A1 offenbart eine Kraftmessvorrichtung.

Aufgabe der Erfindung ist es demzufolge, eine Kraftmessvorrichtung so auszugestalten, dass bei geringem Raumbedarf eine präzise Kraftmessung möglich ist. Die Kraftmessvorrichtung soll dabei einfach und kostengünstig herstellbar sein und eine einfache Korrektur verschiedener Umgebungseinflüsse erlauben.

Diese Aufgabe wird erfindungsgemäß durch die Merkmale des Anspruchs 1 gelöst.

Durch die Verwendung von Lenkerfedern kann erreicht werden, dass eine angreifende Kraft das biegeelastische Element im wesentlichen entlang der durch die Lenkerfedern vorgegebenen Richtung verformt und Auslenkungen des Magnets relativ zu dem magnetfeldempfindlichen Sensor außer in dieser Richtung unterdrückt werden. Durch diese konstruktive Maßnahme wird gewährleistet, dass nur entlang einer vorgegebenen Richtung angreifende Kräfte gemessen werden und in anderer Richtung angreifende Kräfte, die meist auf ungewollte Umgebungseinflüsse zurückzuführen sind, nicht berücksichtigt werden. Der Platzbedarf der Kraftmessvorrichtung, der im wesentlichen durch die Abmessungen der zwei über Lenkerfedern verbundenen biegesteifen Krafteinleitungsbereiche bestimmt ist, ist vergleichsweise gering und kann je nach Anforderung beispielsweise an ein umgebendes Gehäuse angepasst werden. Die Kraftmessvorrichtung ist kostengünstig herstellbar und kann bei Bedarf ausreichend robust gestaltet werden, um auch einer starken Beanspruchung über einen längeren Zeitraum standzuhalten.

Durch die Verwendung von Lenkerfedern kann die mögliche Auslenkung des Magneten relativ zu dem magnetfeldempfindlichen Sensor vorgegeben werden, so dass die in Abhängigkeit von der einwirkenden Kraft und dadurch verursachten Auslenkung des Magneten verursachten Magnetfeldänderungen am Ort des magnetfeldempfindlichen Sensors eindeutig und mit großer Präzision einen Rückschluss auf die zu messende Kraft erlauben.

Darüber hinaus kann bei Verwendung von Lenkerfedern in einfacher Weise gewährleistet werden, dass das Messergebnis einer an der Kraftvorrichtung angreifenden Kraft weitgehend unabhängig von der exakten Lage dieses Krafteinleitungspunkts ist, wodurch Kraftmessungen wesentlich einfacher durchführbar sind und präzisere Messergebnisse erreicht werden können.

Vorzugsweise ist vorgesehen, dass das Zungenelement einstückig mit dem mindestens bereichsweise biegeelastischen Element ausgeführt ist. Die derart ausgeführte Kraftmessvorrichtung kann kostengünstig in einem einzigen Arbeitsschritt weitgehend vorgefertigt werden. Durch die einstückige Ausführung entfallen auch ansonsten notwendige Verbindungselemente oder Befestigungsvorrichtungen des Zungenelements mit dem biegeelastischen Element, wodurch auch die Messgenauigkeit gesteigert wird.

Einer vorteilhaften Ausgestaltung des Erfindungsgedankens zufolge ist vorgesehen, dass die maximale Auslenkung der Lenkerfedern durch Anschläge begrenzt ist. Auf diese Weise wird eine Beschädigung der Kraftmessvorrichtung durch eine zu große Auslenkung der Lenkerfedern vermieden, die möglicherweise über den elastischen Verformungsbereich hinausführen und eine dauerhafte Beschädigung der Kraftmessvorrichtung herbeiführen könnte. Neben einer möglichen Beschädigung der Kraftmessvorrichtung durch zu große Kräfte kann auch eine Auslenkung des Magneten relativ zu dem magnetfeldempfindlichen Sensor verhindert werden, bei welcher von der dadurch bewirkten Magnetfeldänderung nicht mehr eindeutig auf die verursachende Kraft zurückgeschlossen werden könnte und Unsicherheiten oder Fehler bei der Kraftmessung zu befürchten wären.

Es ist vorteilhaft vorgesehen, dass die beiden biegesteifen Krafteinleitungsbereiche über zwei Lenkerfedern verbunden sind und dass das Zungenelement zwischen den beiden Lenkerfedern angeordnet ist. Zwei Lenkerfedern sind für die meisten Anwendungsbereiche ausreichend, um eine den Anforderungen entsprechend genügend genaue Kraftmessung zu ermöglichen. Dabei wird einerseits der für die Kraftmessvorrichtung erforderliche Raumbedarf so gering wie möglich gehalten und andererseits das Zungenelement in einer geschützten Position zwischen den Lenkerfedern angeordnet. Der Abstand der Lenkerfedern voneinander wird dabei zweckmäßigerweise so gewählt, dass auch bei maximal möglicher Auslenkung der Lenkerfedern eine ungewünschte Berührung einer Lenkerfeder mit dem Zungenelement ausgeschlossen ist.

Gemäß einer besonders vorteilhaften Ausgestaltung des Erfindungsgedankens ist vorgesehen, dass die beiden biegesteifen Krafteinleitungsbereiche über zwei Parallellenkerfedern verbunden sind und dass das Zungenelement im nichtausgelenkten Zustand entlang der Mittenlinie der Parallellenkerfedern angeordnet ist. Auf diese Weise wird mit einfachen Mitteln erreicht, dass die beiden Krafteinleitungsbereiche relativ zueinander und damit der Magnet relativ zu dem magnetfeldempfindlichen Sensor im wesentlichen nur entlang zweier paralleler Geraden ausgelenkt werden kann. Die von einer derartigen parallelen Auslenkung verursachte Magnetfeldänderung ist einfach bestimmbar und führt zu einer höheren Messgenauigkeit der die Auslenkung verursachenden Kraft.

Auslenkungen des Zungenelements aus dieser Lage erfolgen in beiden Richtungen näherungsweise linear und ermöglichen eine präzise Kraftmessung unabhängig davon, ob die eingeleitete Kraft das biegeelastische Element auf Zug oder Druck beansprucht. Die Kraftmessvorrichtung kann deshalb unverändert für verschiedene Anwendungen eingesetzt werden.

Einer anderen vorteilhaften Ausgestaltung des Erfindungsgedankens zufolge ist vorgesehen, dass der Abstand der beiden Lenkerfedern im Bereich des fest verbundenen Endes des Zungenelements geringer ist als der Abstand der Lenkerfedern im Bereich des frei beweglichen Endes des Zungenelements. Dadurch wird eine vorteilhafte Übersetzung der Auslenkungen erreicht, so dass auch kleine Kräfte, die nur eine geringe Auslenkung des mit dem Zungenelement verbundenen Krafteinleitungsbereichs bewirken, zu einer größeren Auslenkung des Magneten relativ zu dem magnetfeldempfindlichen Sensor führen. Eine derartige Erweiterung des Messbereichs ist insbesondere dann sinnvoll, wenn aufgrund der verwendeten Materialien und verwendungsspezifischer Vorgaben eine Anpassung des mit der erforderlichen Genauigkeit erfassbaren Messbereichs nicht möglich ist. Eine nicht parallele Anordnung der Lenkerfedern kann auch sinnvoll sein, wenn eine besonders platzsparende oder an starke Belastungen angepasste Kraftmessvorrichtung gewünscht wird.

Vorzugsweise ist vorgesehen, dass der Magnet an dem freien Ende des Zungenelements und der magnetfeldempfindliche Sensor unmittelbar einander gegenüber an dem biegesteifen Krafteinleitungsbereich angeordnet sind. Da der magnetfeldempfindliche Sensor zumindest Anschlüsse zur elektronischen Signalübermittlung aufweisen muss, wird er zweckmäßigerweise leicht zugänglich und unbeweglich an dem biegesteifen Krafteinleitungsbereich befestigt. Gegebenenfalls kann der auch gegenüber mechanischer Beanspruchung empfindliche Sensor in eine entsprechende Aussparung im biegesteifen Krafteinleitungsbereich eingelassen und dadurch geschützt werden. Vorrichtungen zur Kompensation äußerer Magnetfelder oder anderer Umwelteinflüsse können mit geringem konstruktiven Aufwand fest an dem biegesteifen Krafteinleitungsbereich angebracht werden. Als Magnet eignet sich auch ein Dauermagnet, der problemlos an dem frei beweglichen Ende des Zungenelements befestigbar ist.

Vorzugsweise ist vorgesehen, dass der magnetfeldempfindliche Sensor ein Hall-Sensor ist. Derartige Sensoren sind in verschiedenen Ausführungen in großer Anzahl und kostengünstig, kommerziell erhältlich. Aufgrund Ihrer großen Anwendungsbreite sind sie hinsichtlich vieler Eigenschaften gut erforscht und ihr Verhalten bekannt. Es sind unterschiedliche Ausführungen mit für jeweils bestimmte Anforderungen optimierten Eigenschaften auf dem Markt erhältlich. Durch die Verwendung vorgefertigter Bauteile lässt sich der Konstruktions- und Herstellungsaufwand und damit die verbundenen kosten wesentlich reduzieren.

Die Verwendung von Hall-Sensoren ermöglicht es, durch geeignete Ausrichtung des Magnetfeldes unerwünschte Krafteinflüsse zu eliminieren. Insbesondere können durch die Verlagerung der magnetischen Null unerwünschte Kraftkomponenten von der Messwerterfassung ausgeschlossen werden. Dies ist ein wesentlicher Vorteil gegenüber der Verwendung von Dehnungsmessstreifen.

Nachfolgend werden Ausführungsbeispiele der Erfindung näher erläutert, die in der Zeichnung dargestellt sind. Es zeigt:
Fig. 1 eine teilweise geschnittene Seitenansicht einer Kraftmessvorrichtung für Zug- und Druckkräfte,
Fig. 2 eine Seitenansicht der in Fig. 1 gezeigten Kraftmessvorrichtung,
Fig. 3 eine vergrößerte Detailansicht der in Fig. 1 gezeigten Kraftmessvorrichtung mit einem Magnet und einer Hall-Sonde in nicht ausgelenktem Zustand,
Fig. 4 eine teilweise geschnittene Seitenansicht der in Fig. 1 dargestellten Kraftmessvorrichtung in durch Zugkräfte ausgelenktem Zustand,
Fig. 5 eine vergrößerte Detailansicht des in Fig. 4 gezeigten Magneten und des Hall-Sensors in ausgelenktem Zustand,
Fig. 6 eine andere Kraftmessvorrichtung in nicht ausgelenktem Zustand,
Fig. 7 die in Fig. 6 dargestellte Kraftmessvorrichtung in ausgelenktem Zustand,
Fig. 8 einen Schnitt längs der Linie VIII-VIII in Fig. 7,
Fig. 9 eine andere Ausführung einer Kraftmessvorrichtung mit nicht parallel zueinander angeordneten Lenkerfedern,
Fig. 10 eine vergrößerte Detailansicht der in Fig. 9 dargestellten Kraftmessvorrichtung im Bereich um einen Magneten und einen Hall-Sensor,
Fig. 11 die in Fig. 9 dargestellte Kraftmessvorrichtung in ausgelenktem Zustand,
Fig. 12 eine vergrößerte Detailansicht entsprechend Fig. 10, wobei der Magnet relativ zu dem Hall-Sensor ausgelenkt ist,
Fig. 13 eine schematische Abbildung einer Kraftmessvorrichtung zur Messung von radialen Lagerkräften,
Fig. 14 eine Ansicht eines Achslagers mit einer Kraftmessvorrichtung zur Messung von radialen Lagerkräften,
Fig. 15 einen Schnitt längs der Linie XV-XV durch das in Fig. 14 gezeigte Achslager mit der Kraftmessvorrichtung,
Fig. 16 eine perspektivische Darstellung der in den Fig. 14 und 15 gezeigten Kraftmessvorrichtung,
Fig. 17 eine schematisch dargestellte Anordnung von ferromagnetischen Ringkernen um einen Hall-Sensor zur Abschirmung externer Magnetfelder,
Fig. 18 eine Draufsicht auf die in Fig. 14 dargestellte Anordnung und
Fig. 19 eine seitliche Ansicht der in Fig. 14 dargestellten Anordnung.

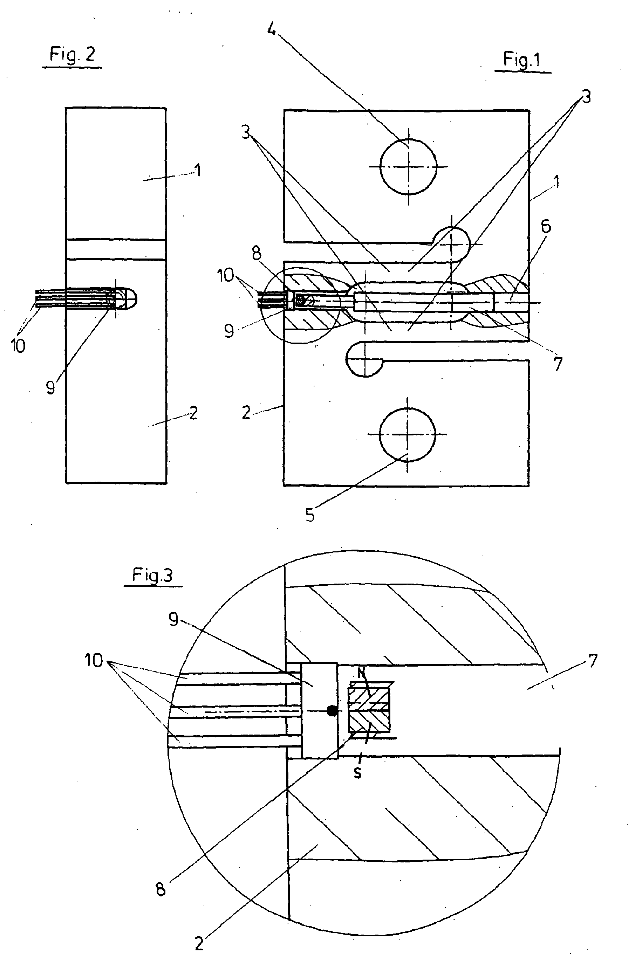

Bei dem in den Fig. 1-5 dargestellten Ausführungsbeispiel einer Kraftmessvorrichtung sind zwei im wesentlichen quaderförmige Krafteinleitungsbereiche 1, 2 über zwei Parallellenkerfedern 3 miteinander verbunden. Die beiden Krafteinleitungsbereiche weisen jeweils eine zentral angeordnete Bohrung 4 und 5 auf, über die direkt oder mittels geeigneter Vorrichtungen Zug- oder Druckkräfte eingeleitet werden können. Die beiden Parallellenkerfedern 3 sind quer zu einer gedachten Verbindungslinie der beiden Bohrungen für die Krafteinleitung angeordnet und an ihren entgegengesetzten Enden jeweils mit einem der biegesteifen Krafteinleitungsbereiche 1, 2 verbunden. Die beiden Krafteinleitungsbereiche 1, 2 sind zusammen mit den sie verbindenden Parallellenkerfedern 3 einstückig ausgeführt. Als Material kommen dabei je nach Anwendung spezifischer Anforderung Stahl, Aluminium oder auch Kunststoffe in Frage.

Eine durchgehende Bohrung 6 ist zwischen den Parallellenkerfedern 3 mittig angeordnet. In der Bohrung 6 ist ein stabförmiges Zungenelement 7 an dessen einem Ende mit dem biegesteifen Krafteinleitungsbereich 1 befestigt. Das Zungenelement 7 ist gesondert hergestellt und besteht aus einem anderen Material wie die einstückig ausgeführten, über die Parallellenkerfedern 3 verbundenen Krafteinleitungsbereiche 1, 2.

Das andere frei bewegliche Ende des stabförmigen Zungenelements 7 ragt weit in die durchgehende Bohrung 6 in den anderen Krafteinleitungsbereich 2 hinein. An dem frei beweglichen Ende des stabförmigen Zungenelements 7 ist Dauermagnet 8 befestigt. Ein Hall-Sensor 9 mit nach außen wegführenden Anschlussleitungen 10 ist so im Endbereich der durchgehenden Bohrung 6 angeordnet, dass seine empfindliche Sensorfläche sich direkt neben der ebenen Stirnseite des mit dem stabförmigen Zungenelement 7 verbundenen Dauermagneten 8 befindet. Der Abstand zwischen der Oberfläche des Hall-Sensors 9 und dem Dauermagneten 8 beträgt weniger als 1 mm.

Aus Fig. 2 ist ersichtlich, dass das stabförmige Zungenelement 7 nicht nur den gleichen Abstand zu den jeweils parallel verlaufenden Parallellenkerfedern 3 aufweist, sondern auch quer dazu mittig angeordnet ist.

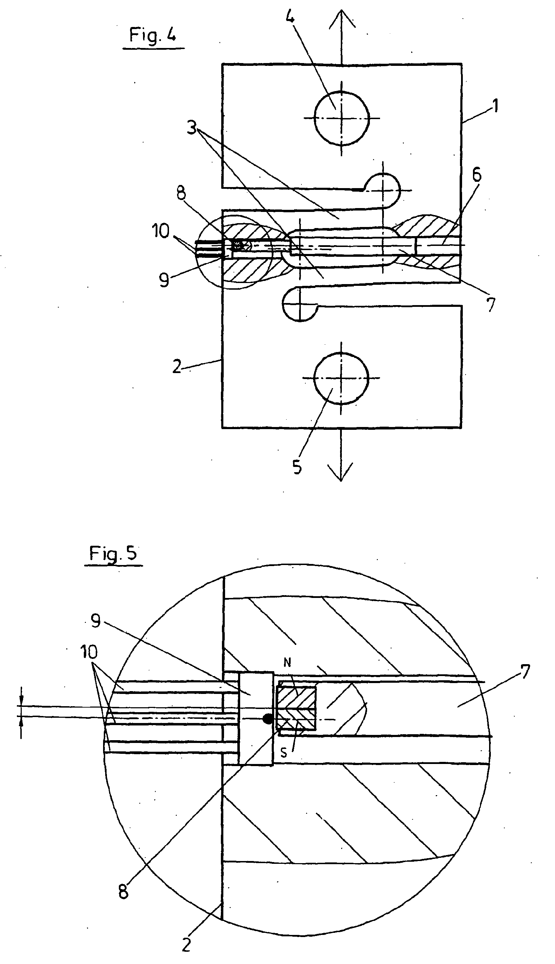

Durch die großzügig bemessenen Krafteinleitungsbereiche 1, 2, die quer zu einer gedachten Verbindungslinie der für die Krafteinleitung vorgesehenen Bohrungen 4, 5 angeordneten Parallellenkerfedern 3 sowie die Gestaltung der Übergangsbereiche der biegesteifen Krafteinleitungsbereiche 1, 2 zu den jeweils zugeordneten Enden der Parallellenkerfedern 3 wird eine besonders vorteilhafte Geometrie der Kraftmessvorrichtung erreicht, die eine hohe Messgenauigkeit und auch über einen langen Zeitraum reproduzierbare Messungen ermöglicht. In den Fig. 4 und 5 wird die Kraftmessvorrichtung in einen durch in entgegengesetzter Richtung wirkende Zugkräfte ausgelenkten Zustand dargestellt. Dabei werden im wesentlichen die jeweils mit einem biegesteifen Krafteinleitungsbereich 1, 2 verbundenen Enden der Parallellenkerfedern 3 entlang paralleler Geraden seitlich relativ zu den gegenüber liegenden Enden verschoben. Dies bewirkt eine ebenfalls als parallele Verschiebung erfolgende Auslenkung des Dauermagneten 8 relativ zu der Oberfläche des Hall-Sensors 9. Die davon verursachte Änderung der Magnetfeldstärke im magnetfeldempfindlichen Messbereich, führt zu einer deutlich messbaren elektrischen Signaländerung des Hall-Sensors. Durch die im wesentlichen parallele Verschiebung der Magnetoberfläche relativ zu der Oberfläche des Hall-Sensors ergeben sich für alle möglichen Auslenkungen einfache, genau bestimmbare Anordnungen, aus denen sich die diese Verschiebung verursachende Kraft mit großer Präzision bestimmen lässt.

Auf Grund des geringen Abstands zwischen dem Dauermagnet 8 und dem Hall-Sensor 9 wird eine für Messzwecke ausreichende Änderung der Magnetfeldstärke in dem magnetfeldempfindlichen Sensorbereich bereits bei geringen Auslenkungen erreicht, so dass die Verformung der Parallellenkerfedern 3 und die Auslenkung des Dauermagneten 8 relativ zu dem Hall-Sensor 9 im wesentlichen linear erfolgen.

Durch die einstückige Ausführung der über die Parallellenkerfedern 3 verbundenen Krafteinleitungsbereiche 1, 2 sowie die reibungsfreie Erfassung der Auslenkung erfolgt eine Kraftmessung nahezu hysteresefrei, wobei eine möglicherweise auftretende Hysterese nur durch die Materialeigenschaften der Parallellenkerfedern 3 sowie durch Reibungsverluste an den Bohrungen 4, 5 der Krafteinleitung bestimmt wird.

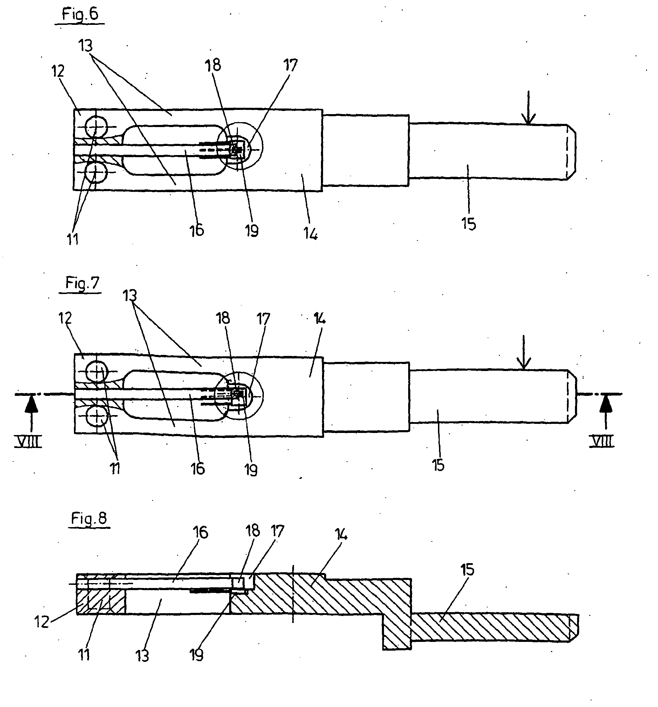

In den Fig. 6-8 ist eine andere Kraftmessvorrichtung dargestellt, die im Gegensatz zu der in den Fig. 1-5 gezeigten Kraftmessvorrichtung Befestigungsbohrungen 11 in einem Krafteinleitungsbereich 12 aufweist, so dass dieser Krafteinleitungsbereich 12 dauerhaft unbeweglich fest mit einem Gehäuse od.dgl. verbunden werden kann. Dieser Krafteinleitungsbereich 12 ist über zwei Parallellenkerfedern 13 mit einem zweiten Krafteinleitungsbereich 14 verbunden, der einen langen Hebelarm 15 zur Kraftaufnahme aufweist. Die beiden Krafteinleitungsbereiche 12, 14, die Parallellenkerfedern 13 und der Hebelarm 15 sind einstückig ausgeführt.

Das stabförmige Zungenelement 16 ist mit dem beispielsweise an einem Gehäuse unbeweglich befestigten Krafteinleitungsbereich 12 fest verbunden und ragt bis über eine Aussparung 17 des gegenüberliegenden Krafteinleitungsbereichs 14. Der an dem frei beweglichen Ende des Zungenelements 16 angebrachte Dauermagnet 18 befindet sich direkt oberhalb des in der Aussparung 17 des Krafteinleitungsbereichs 14 eingelassenen Hall-Sensors 19. Durch eine auf den Hebelarm 15 wirkende Kraft wird der Krafteinleitungsbereich 14 mit dem Hall-Sensor 19 relativ zu dem freien Ende des Zungenelements 16 mit dem Dauermagneten 18 ausgelenkt und diese Auslenkung über die geänderte Magnetfeldstärke im Bereich des Hall-Sensors 19 nachgewiesen.

Bei diesem Ausführungsbeispiel zeigt sich deutlich ein weiterer Vorteil bei Verwendung der Parallellenkerfedern 13, durch die mögliche Auslenkungen in Abhängigkeit der wirkenden Kraft bestimmt und beschränkt werden. So führen in dem dargestellten Beispiel nur im Bereich des Krafteinleitungsbereichs 14 mit dem Hebelarm 15 angreifende Querkräfte zu einer Auslenkung der Parallellenkerfedern 13, die gegenüber senkrecht dazu wirkenden Kräften oder gegenüber Zug- und Druckbeanspruchung in Längsrichtung der Parallellenkerfedern 13 als inelastische, nicht verformbare Bauteile wirken. Darüber hinaus spielt der Angriffspunkt der zu messenden Querkraft im Bereich des Krafteinleitungsbereichs 14 und des Hebelarms 15 keine Rolle und verändert das Messergebnis nicht. Deshalb ist eine derart gestaltete Kraftmessvorrichtung auch geeignet, um dynamische Kraftmessungen mit sich änderndem Kraftangriffspunkt durchzuführen.

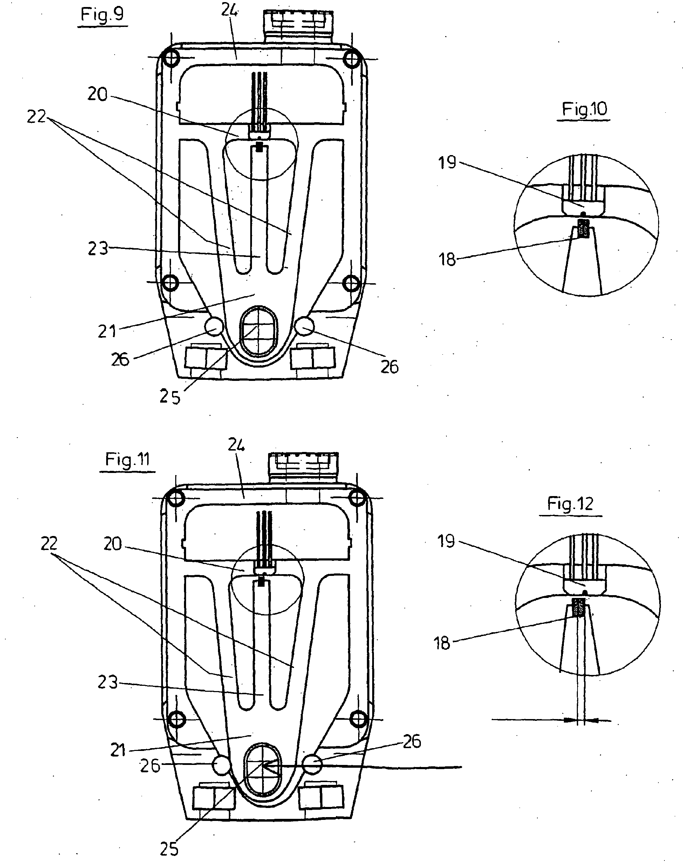

In den Fig. 9-12 ist eine andere Ausführung einer Kraftmessvorrichtung dargestellt, bei der die beiden Krafteinleitungsbereiche 20, 21 sowie die Lenkerfedern 22 und das Zungenelement 23 zusammen mit einem umgebenden Gehäuse 24 einstückig ausgeführt sind. Ein wesentlicher Unterschied zu den vorigen Ausführungsbeispielen ist die nicht parallele, sondern schräg zueinander verlaufende Anordnung der Lenkerfedern 22. Während der Abstand der beiden Lenkerfedern 22 im Bereich des freien Endes des Zungenelements 23 relativ groß ist, verringert er sich kontinuierlich bis zum Übergang in den Krafteinleitungsbereich 21, der eine Aussparung 25 zur einfachen Aufnahme von Querkräften aufweist.

Wird der Krafteinleitungsbereich 21 durch eine Querkraft ausgelenkt, so bewirken die schräg zueinander verlaufenden Lenkerfedern 22 eine Verstärkung der dadurch hervorgerufenen Auslenkung des Zungenelements 23. Die Auslenkung des Zungenelements 23 und damit die Messgenauigkeit kann bei einer vorgegebenen maximalen Auslenkung des Krafteinleitungsbereichs 21 durch die nicht parallel, sondern in einem spitzen Winkel verlaufenden Lenkerfedern 22 vergrößert werden. Die maximale Auslenkung des beweglichen Krafteinleitungsbereichs 21 ist durch am umgebenden Gehäuse 24 angeordnete seitliche Anschläge 26 begrenzt, so dass Beschädigungen der Lenkerfedern 22 durch zu starke Beanspruchung ausgeschlossen sind.

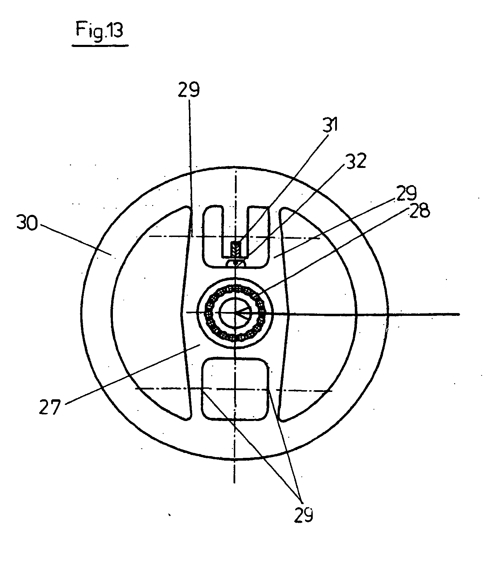

Die in Fig. 13 schematisch dargestellte Kraftmessvorrichtung zur Messung radialer Lagerkräfte in einer Richtung weist einen auslenkbaren Krafteinleitungsbereich 27 auf, in welchem ein Kugellager 28 angeordnet ist. Der auslenkbare Krafteinleitungsbereich 27 ist entgegengesetzten Seiten jeweils über zwei Parallellenkerfedern 29 mit einem fest montierten, unbeweglichen Krafteinleitungsbereich 30 verbunden. Die Anordnung der Parallellenkerfedern 29 bestimmt die quer dazu verlaufende Richtung messbarer Lagerkräfte. Auftretende Lagerkräfte bewirken eine Auslenkung des beweglichen Krafteinleitungsbereichs 27, die über eine entsprechende Verschiebung eines Dauermagneten 31 relativ zu einem Hall-Sensor 32 nachgewiesen werden kann.

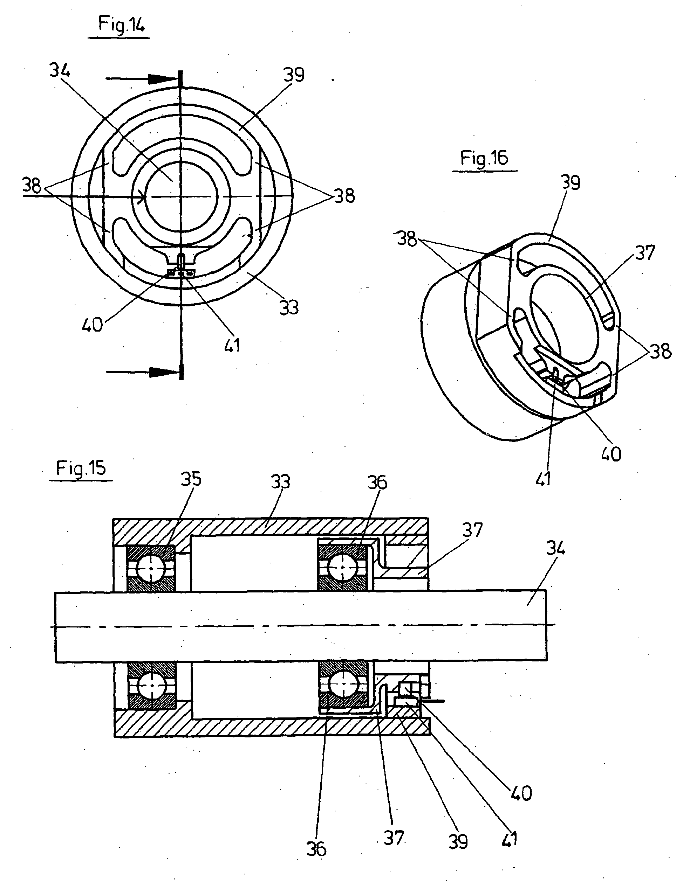

In den Fig. 14 - 16 wird eine Ausführung einer Kraftmessvorrichtung dargestellt, die sich besonders vorteilhaft zur Verwendung als Kraft- oder Leistungsmessgerät in Fahrrädern, auch Elektrofahrrädern zur Ermittlung der zur Tretkraft erforderlichen Zusatzleistung des Motors, oder elektronisch gesteuerten Heimtrainern eignet. Dabei kann die Kraftmessvorrichtung entweder in Verbindung mit der die beiden Tretkurbeln verbindenden Achse oder jeweils an den Pedalachsen angeordnet werden. Eine derartige Kraft- oder Leistungsmessung kann mit einfachen Mitteln robust und kostengünstig hergestellt und weitestgehend wartungsfrei betrieben werden.

Eine in einem Lagergehäuse 33 drehbar beweglich gelagerte Achse 34 wird von zwei Kugellagern 35, 36 gehalten. Eines der beiden Kugellager 36 ist an einem beweglich angeordneten Krafteinleitungsbereich 37 befestigt, der über zwei Paare von Parallellenkerfedern 38 mit einem am Lagergehäuse 33 befestigten unbeweglichen Krafteinleitungsbereich 39 verbunden ist. Bei einer Belastung der Achse 34 senkrecht zur Ausrichtung der Parallellenkerfedern 38, die über das am beweglichen Krafteinleitungsbereich 37 angeordnete Kugellager 36 die in dieser Richtung auf die Achse 34 wirkende Kraft aufnehmen, werden die Parallellenkerfedern 38 und damit der bewegliche Krafteinleitungsbereich 37 ausgelenkt. Ein am beweglichen Krafteinleitungsbereich 37 angeordneter Dauermagnet 40 wird dabei relativ zu einem am unbeweglichen Krafteinleitungsbereich 39 angeordneten Hall-Sensor verschoben und erzeugt dadurch ein Messsignal, welches zur Bestimmung der auf die Achse 34 wirkenden Kraft verwendet werden kann. Neben dem einfachen und unempfindlichen Aufbau wird durch die Anordnung der Parallellenkerfedern 38 eine ausgezeichnete Richtung für eine Kraftmessung vorgegeben. Da die Parallellenkerfedern 38 gegenüber in anderen Richtungen auf die Achse 34 wirkenden Kräften weitgehend biegesteif und kaum deformierbar sind, kann die gemessene Auslenkung des Dauermagneten 40 relativ zum Hall-Sensor 41 einer aus einer einzigen, vorgegebenen und damit bekannten Richtung angreifenden Kraft zugeordnet werden. Aus diesem Grund sind keine weiteren Messungen oder konstruktiven Vorrichtungen notwendig, um die gemessenen Lagerkräfte für eine eindeutige Leistungsmessung zu verwenden, die zum intensiven Training mit entsprechend ausgerüsteten Fahrrädern oder elektronischen Heimtrainern sinnvoll eingesetzt werden kann.

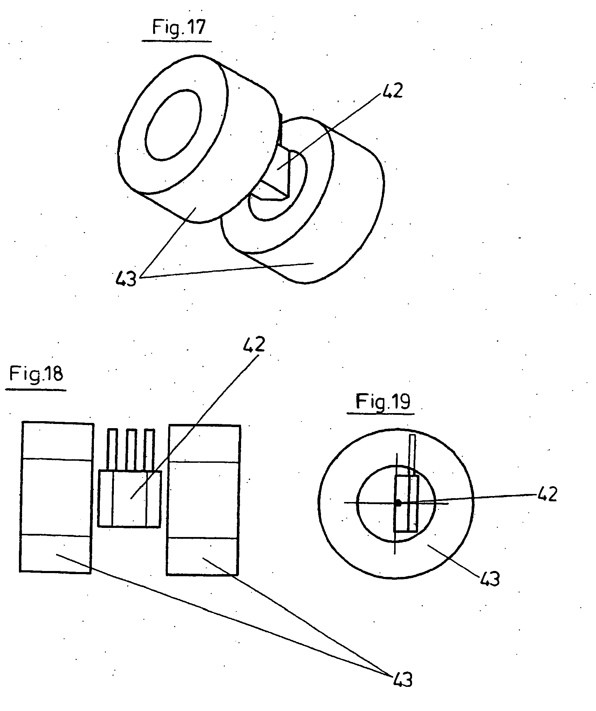

In den Fig. 17 - 19 wird eine Möglichkeit zur Kompensation externer Magnetfelder beschrieben. Der Hall-Sensor 42 wird dazu zwischen zwei ferromagnetischen Ringkernen 43 angeordnet, wobei sich die magnetfeldempfindliche Sensorfläche des Hall-Sensors im Mittelpunkt dieser Anordnung befindet. Dadurch werden störende Einflüsse externer Magnetfelder weitgehend abgeschirmt, so dass insbesondere zeitlich veränderliche Schwankungen äußerer Magnetfelder sich nicht auf die Kraftmessung auswirken. Es ist auch möglich, dass statt einer derartigen Anordnung des Hall-Sensors 42 zwischen ferromagnetischen Ringkernen 43 möglichst nahe am Hall-Sensor 42 das externe Magnetfeld kontinuierlich gemessen wird und bei der Aufarbeitung der mittels des Hall-Sensors gemessenen Signale eine Korrektur in Abhängigkeit von der gemessenen Magnetfeldstärke des externen Magnetfeldes erfolgt.

Alle beschriebenen Ausführungsbeispiele der Kraftmessvorrichtung können nahezu vollständig aus Kunststoff gefertigt werden. Dadurch ergeben sich zum einen Vorteile während der Herstellung und Handhabung, zum anderen reduziert sich eine möglicherweise störende Beeinflussung des zur Kraftmessung verwendeten Magnetfelds durch umgebendes Material.

Es ist für manche Anwendungen sinnvoll, dass die beiden biegesteifen Krafteinleitungsbereiche über mehrere Parallellenkerfedern miteinander verbunden sind. Auf diese Weise können über viele Größenordnungen Kräfte, die mit der Auslenkung der Parallellenkerfedern relativ zueinander korrelieren, auch bei extremen Platzverhältnissen zuverlässig und präzise gemessen werden.

## Patentansprüche

1. Kraftmessvorrichtung mit einem mindestens bereichsweise biegeelastischen Element und einem daran befestigten Zungenelement (7, 16, 23), mit einem Magnet (8, 18, 31, 40) und mit einem magnetfeldempfindlichen Sensor (9, 19, 32, 33, 41), wobei das Zungenelement (7, 16, 23) zwischen zwei Bereichen des biegeelastischen Elements angeordnet ist, das Zungenelement (7, 16, 23) mit seinem einen Ende fest mit einem Bereich des biegeelastischen Elements verbunden ist und mit seinem freien Ende bei elastischen Verformungen des biegeelastischen Elements relativ zu dem anderen Bereich auslenkbar ist und diese Auslenkung mittels des Magneten (8, 18, 31, 40) und des magnetfeldempfindlichen Sensors (9, 19, 32, 33, 41) messbar ist, **dadurch gekennzeichnet, dass** das mindestens bereichsweise biegeelastische Element zwei über Lenkerfedern (3, 13, 22, 29, 38) verbundene biegesteife Krafteinleitungsbereiche (1, 2, 12, 14, 20, 21, 27, 30, 37, 39) aufweist, dass das Zungenelement (7, 16, 23) an einem der beiden Krafteinleitungsbereiche (1, 12, 21) befestigt ist und bis zu dem anderen Krafteinleitungsbereich (2, 14, 20) ragt, dass der Magnet (8, 18, 31, 40) und der magnetfeldempfindliche Sensor (9, 19, 32, 33, 41) an dem Zungenelement (7, 16, 23) und an dem anderen Krafteinleitungsbereich (2, 14, 20) einander gegenüberliegend angeordnet sind, und dass der Magnet (8, 18, 31, 40) relativ zu dem magnetfeldempfindlichen Sensor (9, 19, 32, 33, 41) nur in einer durch die Lenkerfedern (3, 13, 22, 29, 38) vorgegebenen Richtung ausgelenkt wird.

2. Kraftmessvorrichtung nach Anspruch 1, **dadurch gekennzeichnet, dass** das Zungenelement (7, 16, 23) stabförmig ausgebildet ist.

3. Kraftmessvorrichtung nach Anspruch 1, **dadurch gekennzeichnet, dass** das Zungenelement (23) einstückig mit dem mindestens bereichsweise biegeelastischen Element ausgeführt ist.

4. Kraftmessvorrichtung nach Anspruch 1, **dadurch gekennzeichnet, dass** die maximale Auslenkung der Lenkerfedern (22) durch Anschläge (26) begrenzt ist.

5. Kraftmessvorrichtung nach Anspruch 1, **dadurch gekennzeichnet, dass** die beiden biegesteifen Krafteinleitungsbereiche (1, 2, 12, 14, 20, 21) über zwei Lenkerfedern (3, 13, 22) verbunden sind und dass das Zungenelement (7, 16, 23) zwischen den beiden Lenkerfedern (3, 13, 22) angeordnet ist.

6. Kraftmessvorrichtung nach Anspruch 1, **dadurch gekennzeichnet, dass** die beiden biegesteifen Krafteinleitungsbereiche (1, 2, 12, 14) über zwei Parallellenkerfedern (3, 13) verbunden sind und dass das Zungenelement (7, 16) im nicht ausgelenkten Zustand entlang der Mittenlinie der Parallellenkerfedern (3, 13) angeordnet ist.

7. Kraftmessvorrichtung nach Anspruch 1, **dadurch gekennzeichnet, dass** der Abstand der beiden Lenkerfedern (20) im Bereich des fest verbundenen Endes des Zungenelements (23) geringer ist als der Abstand der Lenkerfedern (22) im Bereich des frei beweglichen Endes des Zungenelements (23).

8. Kraftmessvorrichtung nach Anspruch 1, **dadurch gekennzeichnet, dass** die beiden Biegesteifen Krafteinleitungsbereiche (27, 30, 37, 39) über mehrere Parallellenkerfedern (29, 38) miteinander verbunden sind.

9. Kraftmessvorrichtung nach Anspruch 1, **dadurch gekennzeichnet, dass** der Magnet (8, 18, 31, 40) an dem freien Ende des Zungenelements und der magnetfeldempfindliche Sensor (9, 19, 32, 41) unmittelbar einander gegenüber an dem biegesteifen Krafteinleitungsbereich angeordnet sind.

10. Kraftmessvorrichtung nach Anspruch 1, **dadurch gekennzeichnet, dass** der magnetfeldempfindliche Sensor (9, 19, 32, 33, 41) ein Hall-Sensor ist.

## Claims

1. Force measuring device having an element that is flexurally elastic at least in areas thereof and a tongue element (7, 16, 23) affixed thereto, having a magnet (8, 18, 31, 40) and a magnetic field sensitive sensor (9, 19, 32, 33, 41), the tongue element (7, 16, 23) being arranged between two regions of the flexurally elastic element, the tongue element (7, 16, 23) at one end thereof being connected in a fixed manner to one region of the flexurally elastic element and, at its free end, being deflectable relative to the other region upon elastic deformation of the flexurally elastic element, and said deflection being measurable by means of the magnet (8, 18, 31, 40) and the magnetic field sensitive sensor (9, 19, 32, 33, 41), **characterized in that** the element that is flexurally elastic at least in areas thereof has two flexurally rigid force application areas (1, 2, 12, 14, 20, 21, 27, 30, 37, 39) that are connected via link springs (3, 13, 22, 29, 38), the tongue element (7, 16, 23) is affixed to one of the two force application areas (1, 12, 21) and protrudes up to the other force application area (2, 14, 20), the magnet (8, 18, 31, 40) and the magnetic field sensitive sensor (9, 19, 32, 33, 41) are arranged opposite each other at the tongue element (7, 16, 23) and at the other force application area (2, 14, 20), and the magnet (8, 18, 31, 40) is deflected relative to the magnetic field sensitive sensor (9, 19, 32, 33, 41) only in a direction predetermined by the link springs (3, 13, 22, 29, 38).

2. Force measuring device in accordance with claim 1, **characterized in that** the tongue element (7, 16, 23) is of bar-like configuration.

3. Force measuring device in accordance with claim 1, **characterized in that** the tongue element (23) is integrally formed with the element that is flexurally elastic at least in areas thereof.

4. Force measuring device in accordance with claim 1, **characterized in that** the maximum deflection of the link springs (22) is limited by stops (26).

5. Force measuring device in accordance with claim 1, **characterized in that** the two flexurally rigid force application areas (1, 2, 12, 14, 20, 21) are connected via two link springs (3, 13, 22) and the tongue element (7, 16, 23) is arranged between the two link springs (3, 13, 22).

6. Force measuring device in accordance with claim 1, **characterized in that** the two flexurally rigid force application areas (1, 2, 12, 14) are connected via two parallel link springs (3, 13) and the tongue element (7, 16) in the non-deflected state is arranged along the centreline of the parallel link springs (3, 13).

7. Force measuring device in accordance with claim 1, **characterized in that** the distance between the two link springs (20) in the area of the end of the tongue element (23) that is connected in a fixed manner is smaller than the distance of the link springs (22) in the area of the end of the tongue element (23) that is freely movable.

8. Force measuring device in accordance with claim 1, **characterized in that** the two flexurally rigid force application areas (27, 30, 37, 39) are connected to each other via a plurality of link springs (29, 38).

9. Force measuring device in accordance with claim 1, **characterized in that** the magnet (8, 18, 31, 40) at the free end of the tongue element and the magnetic field sensitive sensor (9, 19, 32, 41) are arranged directly opposite each other at the flexurally rigid force application area.

10. Force measuring device in accordance with claim 1, **characterized in that** the magnetic field sensitive sensor (9, 19, 32, 33, 41) is a Hall sensor.

## Revendications

1. Dispositif de mesure de force avec un élément élastiquement flexible au moins localement et un élément de languette (7, 16, 23) fixé sur celui-ci, avec un aimant (8, 18, 31, 40) et avec un détecteur (9, 19, 32, 33, 41) sensible au champ magnétique, dans lequel l'élément de languette (7, 16, 23) est disposé entre deux zones de l'élément élastiquement flexible, l'élément de languette (7, 16, 23) est solidement assemblé par une de ses extrémités à une zone de l'élément élastiquement flexible et peut dévier par son extrémité libre par rapport à l'autre zone lors de déformations élastiques de l'élément élastiquement flexible, et cette déviation peut être mesurée au moyen de l'aimant (8, 18, 31, 40) et du détecteur (9, 19, 32, 33, 41) sensible au champ magnétique, **caractérisé en ce que** l'élément élastiquement flexible au moins localement présente deux zones d'introduction de force (1, 2, 12, 14, 20, 21, 27, 30, 37, 39) rigides en flexion reliées par des ressorts de liaison (3, 13, 22, 29, 38), **en ce que** l'élément de languette (7, 16, 23) est fixé à l'une des deux zones d'introduction de force (1, 12, 21) et s'étend jusqu'à l'autre zone d'introduction de force (2, 14, 20), **en ce que** l'aimant (8, 18, 31, 40) et le détecteur (9, 19, 32, 33, 41) sensible au champ magnétique sont disposés l'un en face de l'autre sur l'élément de languette (7, 16, 23) et sur l'autre zone d'introduction de force (2, 14, 20), et **en ce que** l'aimant (8, 18, 31, 40) n'est dévié par rapport au détecteur (9, 19, 32, 33, 41) sensible au champ magnétique que dans une direction prédéterminée par les ressorts de liaison (3, 13, 22, 29, 38).

2. Dispositif de mesure de force selon la revendication 1, **caractérisé en ce que** l'élément de languette (7, 16, 23) est réalisé en forme de barreau.

3. Dispositif de mesure de force selon la revendication 1, **caractérisé en ce que** l'élément de languette (23) est réalisé d'une seule pièce avec l'élément élastiquement flexible au moins localement.

4. Dispositif de mesure de force selon la revendication 1, **caractérisé en ce que** la déviation maximale des ressorts de liaison (22) est limitée par des butées (26).

5. Dispositif de mesure de force selon la revendication 1, **caractérisé en ce que** les deux zones d'introduction de force (1, 2, 12, 14, 20, 21) rigides en flexion sont reliées par deux ressorts de liaison (3, 13, 22) et **en ce que** l'élément de languette (7, 16, 23) est disposé entre les deux ressorts de liaison (3, 13, 22).

6. Dispositif de mesure de force selon la revendication 1, **caractérisé en ce que** les deux zones d'introduction de force (1, 2, 12, 14) rigides en flexion sont reliées par deux ressorts de liaison parallèles (3, 13) et **en ce que** l'élément de languette (7, 16) est disposé, à l'état non dévié, le long de la ligne moyenne des ressorts de liaison parallèles (3, 13).

7. Dispositif de mesure de force selon la revendication 1, **caractérisé en ce que** la distance des deux ressorts de liaison (20) dans la zone de l'extrémité solidement assemblée de l'élément de languette (23) est plus petite que la distance des ressorts de liaison (22) dans la zone de l'extrémité librement mobile de l'élément de languette (23).

8. Dispositif de mesure de force selon la revendication 1, **caractérisé en ce que** les zones d'introduction de force (27, 30, 37, 39) rigides en flexion sont reliées l'une à l'autre par plusieurs ressorts de liaison parallèles (29, 38).

9. Dispositif de mesure de force selon la revendication 1, **caractérisé en ce que** l'aimant (8, 18, 31, 40) sur l'extrémité libre de l'élément de languette et le détecteur (9, 19, 32, 41) sensible au champ magnétique sont disposés directement l'un en face de l'autre sur la zone d'introduction de force rigide en flexion.

10. Dispositif de mesure de force selon la revendication 1, **caractérisé en ce que** le détecteur (9, 19, 32, 33, 41) sensible au champ magnétique est un détecteur de Hall.
